# EUROPÄISCHE PATENTANMELDUNG

(11) **EP 0 856 479 A1**
(43) Veröffentlichungstag der Anmeldung: **05.08.1998**
(21) Anmeldenummer: 97121954.8
(22) Anmeldetag: 12.12.1997
(51) Int. Cl.: B65G 1/137, B65G 1/04, B65G 47/51

(54) **Behälter-Sortierpuffer für eine Kommissionieranlage**

(30) Priorität: 30.01.1997 DE 29701565 U
(71) Anmelder: WITRON Logistik & Informatik GmbH, 92711 Parkstein (DE)
(72) Erfinder: Winkler, Walter, 92711 Parkstein (DE)
(74) Vertreter: Betten & Resch

(57) **Zusammenfassung**

Ein Behälter-Sortierpuffer für eine Kommissionieranlage, der im Transportweg der Behälter zwischen einem Behälter-Verteilsystem und einem Arbeitsplatz angeordnet ist, weist eine Einlagerstrecke (14) zum Einlagern der Behälter (26) in den Sortierpuffer auf, eine Auslagerstrecke (16) zum Auslagern von Behältern aus dem Sortierpuffer, eine Mehrzahl von Stellplätzen (22, 24) innerhalb des Sortierpuffers, eine Bedieneinheit (18) zur Aufnahme der Behälter von der Einlagerstrecke und zum Transport der einzelnen Behälter zu einem freien Stellplatz sowie zum Abtransport von Behältern von einem Stellplatz und zur folgerichtigen Abgabe der einzelnen Behälter an die Auslagerstrecke, sowie Mittel zur Steuerung des Sortierpuffers. Der Einsatz eines solchen Sortierpuffers hilft, die Effizienz der bekannten automatischen Kommissionieranlagen zu steigern, da er es ermöglicht, dem einzelnen Arbeitsplatz die für diesen Arbeitsplatz relevanten Behälter in der richtigen Reihenfolge und in der richtigen Menge zur Verfügung zu stellen.

## Beschreibung

Die Erfindung betrifft einen Transporteinheiten-Sortierpuffer für eine Kommissionieranlage, insbesondere einen Behälter-Sortierpuffer hierfür, sowie eine Kommissionieranlage, die solche Transporteinheiten-Sortierpuffer bzw. Behälter-Sortierpuffer umfaßt. Soweit im folgenden von "Behältern" die Rede ist, soll dies nicht einschränkend verstanden werden, vielmehr bezieht sich die vorliegende Erfindung auf sämtliche Transporteinheiten, die in Kommissionieranlagen üblicherweise gehandhabt werden.

Nach einem bekannten Stand der Technik werden die Behälter aus einem Behälterlager entnommen, über Transportstrecken einem zentralen Verteilersystem zugeführt und vom Verteilersystem in der gewünschten Reihenfolge über weitere Transportwege den jeweiligen Arbeitsplätzen zugeführt.

Der Erfindung liegt die Aufgabe zugrunde, die Effizienz der bekannten automatischen Kommissionieranlagen zu steigern.

Zur Lösung dieser Aufgabe ist der erfindungsgemäße Sortierpuffer für Behälter-Transporteinheiten vorgesehen, der im Transportweg der Behälter zwischen einem Behälter-Verteilsystem und einem Arbeitsplatz angeordnet ist, wobei der Sortierpuffer folgendes aufweist:
- eine Einlagerstrecke zum Einlagern von Behältern in den Sortierpuffer,
- eine Auslagerstrecke zum Auslagern von Behältern aus dem Sortierpuffer,
- eine Mehrzahl von Stellplätzen innerhalb des Sortierpuffers,
- eine Bedieneinheit zur Aufnahme der Behälter von der Einlagerstrecke und zum Transport der einzelnen Behälter zu einem freien Stellplatz sowie zum Abtransport von Behältern von einem Stellplatz und zur folgerichtigen Abgabe der einzelnen Behälter an die Auslagerstrecke, und
- Mittel zur Steuerung des Sortierpuffers.

Der erfindungsgemäße Sortierpuffer ermöglicht es, daß dem einzelnen Arbeitsplatz die für diesen Arbeitsplatz relevanten Transporteinheiten (mit Artikeln gefüllte Behälter) in der richtigen Reihenfolge und in der richtigen Menge zur Verfügung gestellt werden, um die anstehenden Aufträge bearbeiten und fertigstellen zu können. Der erfindungsgemäße Sortierpuffer kann die verschiedenen Artikel-Behälter somit unsortiert aufnehmen, zwischenpuffern und anschließend folgerichtig an den Arbeitsplatz weiterleiten. Die primäre Funktion des Sortierpuffers liegt hierbei bei der Sortiertunktion, die durch den wahlfreien Zugriff auf jede Transporteinheit innerhalb des Sortierpuffers ermöglicht wird. Darüber hinaus hat der erfindungsgemäße Sortierpuffer auch noch die Funktion einer Pufferung der Transporteinheiten.

Steigende Auftragszahlen und damit verbunden sinkende Abnahmemengen sowie geringe Auftragszeiten erfordern einen erhöhten Handlingsaufwand bei der Bearbeitung von Aufträgen in automatisierten Kommissionieranlagen. Mit Hilfe des erfindungsgemäßen Sortierpuffers wird die Konsolidierung und Sortierung der einzelnen Artikel für einen Auftrag erleichtert und kann hochflexibel gestaltet werden. Insbesondere ergeben sich für den Anwender durch den Einsatz des erfindungsgemäßen Sortierpuffers folgende Vorteile und Nutzen:
- hohe Versorgungsleistung mit Lagerbehältern an den Kommissionierplätzen durch erhöhte Auslastung der Regalfahrzeuge, die bei der Auslagerung der Transporteinheiten aus dem Lagersystem an keine bestimmte Reihenfolge mehr gebunden sind
- wahlfreier Zugriff auf die Transporteinheiten
- wahlfreie Sortierung der Transporteinheiten
- flexible Zuführung von Transporteinheiten
- optimale Versorgung von Arbeitsplätzen
- Pufferung von Transporteinheiten

In bevorzugter Weiterbildung der Erfindung sind die Stellplätze insbesondere in zwei sich gegenüberstehenden Türmen übereinanderliegend angeordnet und die Bedieneinheit umfaßt ein vertikal bewegliches Aufnahmemittel, das zwischen den beiden Türmen angeordnet ist und somit jeden einzelnen der Stellplätze individuell bedienen kann.

Besonders vorteilhaft ist es auch, wenn das Lastaufnahmemittel eine horizontal ausfahrbare Teleskopplattform und zusätzlich einen Riemenförderer umfaßt und wenn des weiteren die Stellflächen der Stellplätze von der Bedieneinheit bzw. dem Lastaufnahmemittel weg geneigt sind und vorzugsweise mit Röllchenleisten und mit einem geeigneten Anschlag versehen sind. Hierdurch ergibt sich eine besonders kurze Zugriffszeit auf die einzelnen Stellplätze des Sortierpuffers. Die Abgabe der Transporteinheit von der Bedieneinheit an den entsprechenden Stellplatz des Sortierpuffers erfolgt hierbei ohne Bewegung der Teleskopplattform und ohne jeglichen Relativ-Hub der Bedieneinheit. Die Transporteinheit wird durch Abfördern mit dem Riemenförderer des Lastaufnahmemittels auf den Stellplatz eingelagert. Die Transporteinheit gleitet dann aufgrund der Neigung der Stellfläche selbsttätig in ihre Zwischenlager-Position, in welcher sie an dem Anschlag anschlägt. Die Röllchenleisten o.dgl. erleichtern und beschleunigen das Gleiten der Transporteinheit.

Die Auslagerung der jeweiligen Transporteinheit erfolgt mit Hilfe der ausfahrbaren Teleskopplattform, die unter der entsprechenden Transporteinheit positioniert wird. Durch einen Relativ-Hub des Lastaufnahmemittels wird die Transporteinheit angehoben und durch Einfahren der Teleskopplattform wird die Transporteinheit aus dem Stellplatz entnommen und dem Riemenförderer zugeführt, der dann die vollständige Auslagerung auf das Lastaufnahmemittel durchführt.

Hierdurch ergeben sich äußerst kurze Zugriffszeiten auf die einzelnen Stellplätze des Sortierpuffers. Durch die optimierte Ein- und Auslagerung sind Spielzeiten von ca. 200 Doppelspielen/Std. möglich.

Gemäß einem weiteren vorteilhaften Merkmal der Erfindung weist die Bedieneinheit eine Grundposition auf, in der sie die Einlagerstrecke und die Auslagerstrecke überbrückt. Ist die Auslagerstrecke in Verlängerung der Einlagerstrecke angeordnet, was eine zweckmäßige Anordnung darstellen wird, so befindet sich diese Grundposition der Bedieneinheit genau zwischen Einlagerstrecke und Auslagerstrecke. Aufgrund dieses Merkmals ist es möglich, auf eine Zwischenlagerung einer Transporteinheit im Sortierpuffer gegebenenfalls zu verzichten, falls eine Transporteinheit für einen Auftrag sofort benötigt wird. Das Lastaufnahmemittel der Bedieneinheit dient in diesem Falle als überbrückende Förderstrecke zwischen Einlager- und Auslagerstrecke. Die Transporteinheit wird von der Einlagerstrecke über den Riemenförderer des Lastaufnahmemittels auf die Auslagerstrecke transportiert.

Weitere vorteilhafte Merkmale der Erfindung ergeben sich aus den übrigen Unteransprüchen sowie aus der nachfolgenden Beschreibung, in der ein bevorzugtes Ausführungsbeispiel der Erfindung anhand der Zeichnung näher erläutert wird. In der Zeichnung zeigen in halbschematischer bzw. in schematischer Darstellung:
Fig. 1 eine Seitenansicht eines erfindungsgemäßen Sortierpuffers,
Fig. 2 eine Draufsicht auf den Sortierpuffer gemäß Fig. 1,
Fig. 3a bis 3e verschiedene Betriebszustände des Lastaufnahmemittels des Sortierpuffers gemäß Fig. 1, und

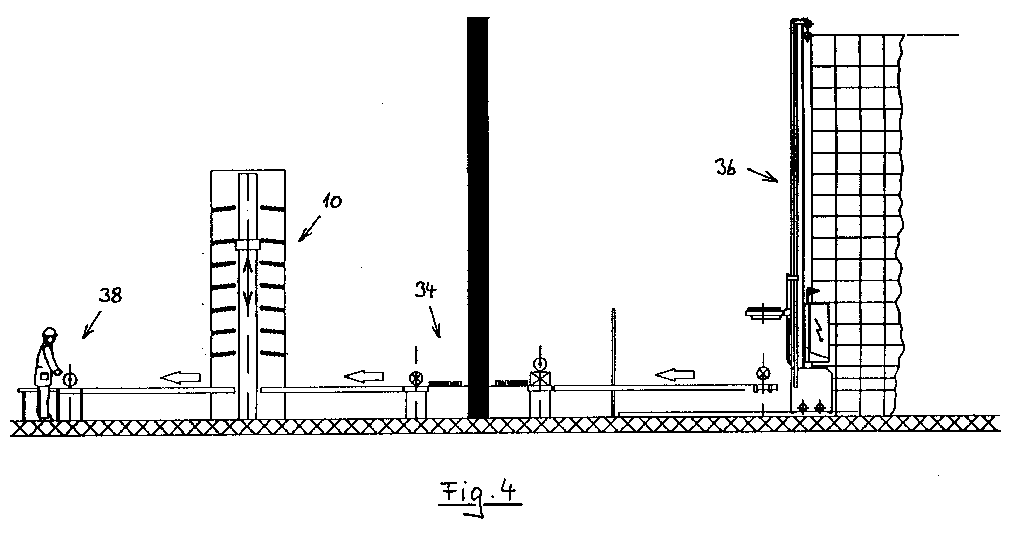

Fig. 4 eine Kommissionieranlage mit einem erfindungsgemäßen Sortierpuffer.

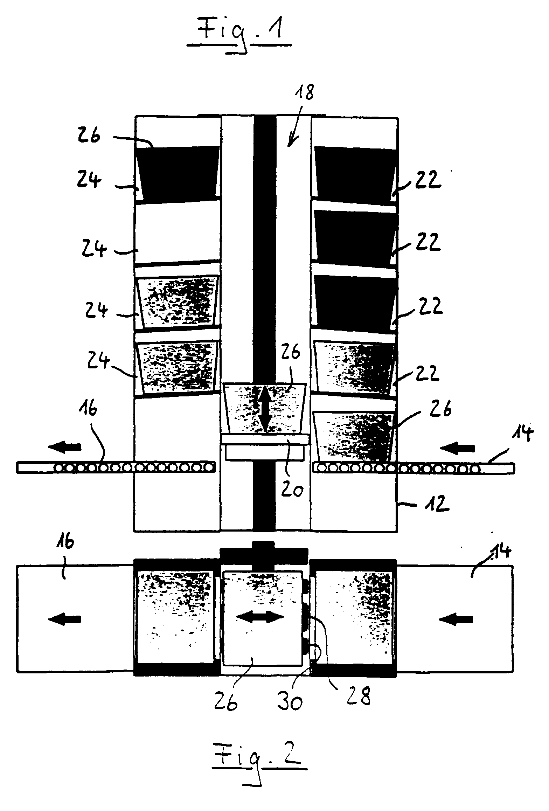

Der insgesamt mit der Bezugsziffer 10 bezeichnete Sortierpuffer umfaßt einen Rahmen 12, an dessen einer Seite eine mit der Bezugsziffer 14 bezeichnete horizontale Einlagerstrecke und an dessen gegenüberliegender Seite eine mit der Bezugsziffer 16 bezeichnete Auslagerstrecke angeordnet ist. Die Einlagerstrecke 14 wie auch die Auslagerstrecke 16 besteht im wesentlichen jeweils aus einer angetriebenen Rollenbahn mit Staufunktion. An die Einlagerstrecke schließt eine Förderstrecke, die zu einer zentralen Sortiereinrichtung 34 bzw. einem Behälterlager 36 führt, an, und an die Auslagerstrecke schließt eine weitere Förderstrecke an, die zu einem Arbeitsplatz 38 führt. Die in den Fig. 1 und 2 dargestellten Pfeile zeigen die allgemeine Transportrichtung des Fördergutes.

Zwischen der Einlagerstrecke 14 und der Auslagerstrecke 16 ist eine insgesamt mit Bezugsziffer 18 bezeichnete Bedieneinheit angeordnet, welche ein Lastaufnahmemittel 20 umfaßt, welches entlang einer vertikalen Führung über einen nicht näher dargestellten Hubantrieb an sich bekannter Art in vertikaler Richtung bewegt werden kann, wie durch den Doppelpfeil angedeutet.

Beidseitig der Bedieneinheit 18 und oberhalb der Einlagerstrecke 14 bzw. der Auslagerstrecke 16 sind jeweils eine Anzahl von übereinander angeordneten Stellplätzen 22, 24 angeordnet, die zur Aufnahme je eines Behälters 26 dienen. Im Falle des vorliegenden Ausführungsbeispiels sind insgesamt acht Stellplätze vorgesehen, die Anzahl der Stellplätze kann jedoch je nach Bedarf beliebig nach oben oder unten variiert werden.

Die über die Einlagerstrecke ankommenden Behälter 26 gelangen auf das Lastaufnahmemittel 20, das sich in unterster Position befindet, wo es bündig mit der Einlagerstrecke (und der Auslagerstrecke) ist, und die einzelnen Behälter werden dann über das Lastaufnahmemittel 20 zu jeweils freien Stellplätzen gebracht und in diesen Stellplätzen zwischengelagert. Umgekehrt werden die auszulagernden Behälter 26 vom Lastaufnahmemittel 20 der Bedieneinheit 18 übernommen und zur Auslagerstrecke 16 gefördert.

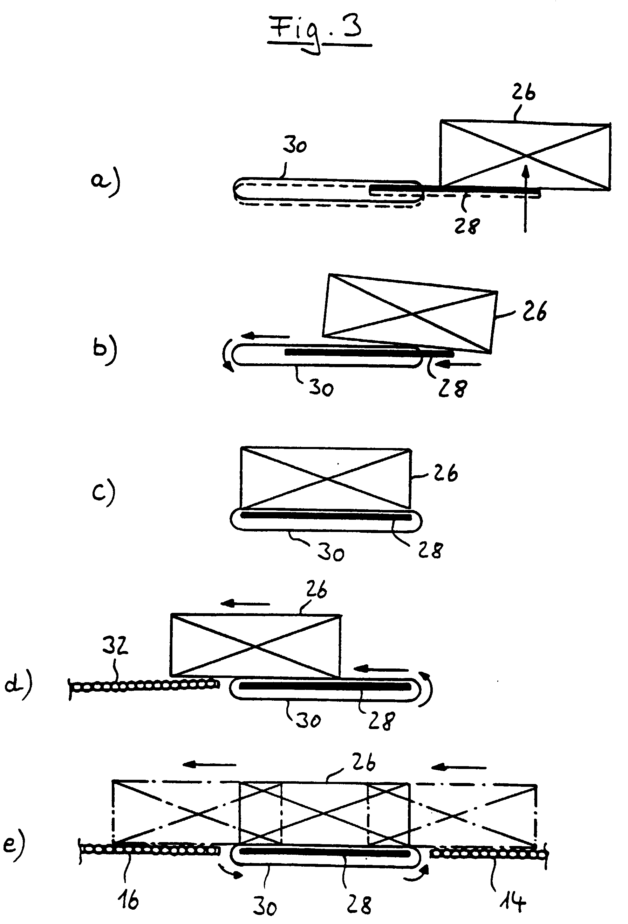

Das Lastaufnahmemittel 20 umaßt eine Teleskopplattform 28, die in horizontaler Richtung ausfahrbar ist, sowie einen Riemenförderer 30, der in beiden Drehrichtungen antreibbar ist. Die Böden der Stellplätze 22, 24 sind, wie insbesondere aus Fig. 1 ersichtlich, geneigt und weisen beidseitig je eine Röllchenleiste 32 auf, vgl. Fig. 3d, auf der die über das Lastaufnahmemittel 20 dem jeweiligen Stellplatz zugeführten Behälter 26 selbsttätig in ihre Speicherposition rollen, bis sie an einem nicht näher dargestellten Fachanschlag anschlagen.

Die Funktion des vorstehend beschriebenen Sortierpuffers ist wie folgt:

Die über die Einlagerstrecke 14 ankommenden Behälter werden über den Riemenförderer 30 auf das in seiner unteren Grundposition befindliche Lastaufnahmemittel 20 der Bedieneinheit 18 übernommen, vgl. Fig. 3e. Anschließend wird das Lastaufnahmemittel nach oben bewegt, bis der Behälter einem von der (nicht dargestellten) Systemssteuerung ausgewählten freien Stellplatz gegenüberliegt. Der Behälter wird sodann durch Abfördern mit dem Riemenförderer 30 des Lastaufnahmemittel 20, ohne jeglichen Relativ-Hub der Bedieneinheit, auf den Stellplatz eingelagert, wobei der Behälter aufgrund der Neigung der Röllchenleisten 32 im zweiten Abschnitt seiner Einlagerbewegung selbsttätig in seine Sollposition rollt, vgl. Fig. 3d.

Zur Auslagerung eines über die Systemsteuerung ausgewählten Behälters wird das Lastaufnahmemittel 20 in die dem jeweiligen Stellplatz gegenüberliegende Position gebracht. Anschließend wird die Teleskopplattform 28 des Lastaufnahmemittel 20 unter die entsprechende Transporteinheit positioniert; durch einen Relativ-Hub des Lastaufnahmemittel wird der Behälter geringfügig angehoben. Diese Situation zeigt Fig. 3a, wobei die Ausgangsstellung gestrichelt und die Endstellung durchgezogen dargestellt ist. Durch Einfahren der Teleskopplattform 28 wird der Behälter aus dem Stellplatz entnommen und dem Riemenförderer 30 zugeführt, vgl. Fig. 3b, der dann die vollständige Auslagerung des Behälters auf das Lastaufnahmemittel 20 durchführt, vgl. 3c.

Anschließend wird das Lastaufnahmemittel 20 wieder in seine unterste Position verfahren, vgl. Fig. 3e, wo der Behälter mittels des Riemenförderer 30 an die Auslagerstrecke 16 abgegeben wird.

Es sei darauf hingewiesen, daß in der Praxis zunächst alle relevanten Behälter (Transporteinheiten) eines Auftrages im Sortierpuffer 10 eingelagert werden und daß anschließend die folgerichtige Auslagerung der entsprechenden Behälter und Übergabe auf die Auslagerstrecke erfolgt. Über die Auslagerstrecke werden die Behälter dann dem jeweiligen Arbeitsplatz zugeführt. Die Verwaltung und Optimierung des Sortierpuffers übernimmt hierbei ein geeignetes, nicht näher dargestelltes Steuerungssystem.

Wird ein Behälter für einen Auftrag sofort benötigt, so kann auf eine Zwischenpufferung im Sortierpuffer verzichtet werden. Das Lastaufnahmemittel 20 der Bedieneinheit 18 befindet sich in diesem Fall in ihrer in Fig. 3e dargestellten untersten Position und dient als überbrückende Förderstrecke zwischen Einlagerstrecke 14 und Auslagerstrecke 16; der Behälter wird somit von der Einlagerstrecke über den Riemenförderer 30 des Lastaufnahmemittel 20 auf die Auslagerstrecke 16 transportiert.

In der Praxis umfaßt eine Kommissionieranlage eine Mehrzahl von Arbeitsplätzen 38; gemäß der Erfindung ist vorgesehen, daß jedem Arbeitsplatz 38 ein eigener Sortierpuffer 10 zugeordnet ist.

### Bezugszeichenliste

- 10: Sortierpuffer
- 12: Rahmen
- 14: Einlagerstrecke
- 16: Auslagerstrecke
- 18: Bedieneinheit
- 20: Lastaufnahmemittel
- 22: Stellplätze
- 24: Stellplätze
- 26: Behälter
- 28: Teleskopplattform
- 30: Riemenförderer
- 32: Röllchenleiste
- 34: Sortiereinheit
- 36: Behälterlager
- 38: Arbeitsplatz

## Patentansprüche

1. Behälter-Sortierpuffer für eine Kommissionieranlage, der im Transportweg der Behälter (26) zwischen einem Behälter-Verteilsystem und einem Arbeitsplatz angeordnet ist und folgende Merkmale aufweist:
- eine Einlagerstrecke (14) zum Einlagern von Behältern (26) in den Sortierpuffer (10),
- eine Auslagerstrecke (16) zum Auslagern von Behältern (26) aus dem Sortierpuffer (10),
- eine Mehrzahl von Stellplätzen (22, 24) innerhalb des Sortierpuffers (10),
- eine Bedieneinheit (18) zur Aufnahme der Behälter (26) von der Einlagerstrecke (14) und zum Transport der einzelnen Behälter (26) zu einem freien Stellplatz (22, 24) sowie zum Abtransport von Behältern (26) von einem Stellplatz (22, 24) und zur folgerichtigen Abgabe der einzelnen Behälter (26) an die Auslagerstrecke (16), und
- Mittel zur Steuerung des Sortierpuffers.

2. Sortierpuffer nach Anspruch 1, dadurch gekennzeichnet, daß die Stellplätze (22, 24) übereinanderliegend angeordnet sind.

3. Sortierpuffer nach Anspruch 2, dadurch gekennzeichnet, daß die Stellplätze (22, 24) in zwei sich gegenüberstehenden Türmen übereinander angeordnet sind.

4. Sortierpuffer nach Anspruch 2 oder 3, dadurch gekennzeichnet, daß die Bedieneinheit (18) ein vertikal bewegliches Lastaufnahmemittel (20) umfaßt.

5. Sortierpuffer nach Anspruch 4, dadurch gekennzeichnet, daß das Lastaufnahmemittel (20) eine horizontal ausfahrbare Teleskopplattform (28) mit oder ohne einen Riemenförderer (30) umfaßt.

6. Sortierpuffer nach einem der vorhergehenden Ansprüche, dadurch gekennzeichnet, daß die Stellflächen der Stellplätze (22, 24) von der Bedieneinheit (18) weg geneigt sind und einen Anschlag für die Endposition der Behälter aufweisen.

7. Sortierpuffer nach Anspruch 6, dadurch gekennzeichnet, daß die Stellflächen der Stellplätze (22, 24) mit Rollen o`dgl., insbesondere mit zwei gegenüberliegenden Röllchenleisten (32) versehen sind.

8. Sortierpuffer nach einem der vorhergehenden Ansprüche, dadurch gekennzeichnet, daß die Auslagerstrecke (16) in Verlängerung der Einlagerstrecke (14) angeordnet ist.

9. Sortierpuffer nach einem der vorhergehenden Ansprüche, dadurch gekennzeichnet, daß die Bedieneinheit (18) eine Grundposition aufweist, in der sie die Einlagerstrecke (14) und die Auslagerstrecke (16) überbrückt.

10. Sortierpuffer nach einem der vorhergehenden Ansprüche, dadurch gekennzeichnet, daß die Einlagerstrecke (14) und/oder die Auslagerstrecke (16) angetriebene bzw. antreibbare Transporteinheiten sind.

11. Sortierpuffer nach Anspruch 10, dadurch gekennzeichnet, daß die Einlagerstrecke (14) und/oder die Auslagerstrecke (16) Rollenförderer bzw. Staurollenförderer sind.

12. Sortierpuffer nach einem der vorhergehenden Ansprüche, dadurch gekennzeichnet, daß mindestens vier Stellplätze (22, 24) vorgesehen sind.

13. Kommissionieranlage mit einem zwischen einem Behälter-Lagersystem und einem Arbeitsplatz definierten Behälter-Transportweg, gekennzeichnet durch mindestens einen im Transportweg angeordneten Sortierpuffer (10) nach einem der vorhergehenden Ansprüche.

14. Kommissionieranlage mit mehreren Arbeitsplätzen, dadurch gekennzeichnet, daß jedem Arbeitsplatz ein Sortierpuffer (10) nach einem der Ansprüche 1 bis 12 zugeordnet ist.
